(19) Europäisches Patentamt
European Patent Office
Office européen des brevets

(11) **EP 3 101 816 B1**

(12) **FASCICULE DE BREVET EUROPEEN**

(45) Date de publication et mention de la délivrance du brevet:
**30.11.2022 Bulletin 2022/48**

(21) Numéro de dépôt: **15190532.0**

(22) Date de dépôt: **20.10.2015**

(51) Classification Internationale des Brevets (IPC):
***H04B 5/00*** *(2006.01)*

(52) Classification Coopérative des Brevets (CPC):
**H04B 1/18; H04B 1/0458; H04B 5/0025**

(54) **SYSTÈME ET APPAREIL DE CONTRÔLE DE L'ACCORD SUR UNE FRÉQUENCE DE COMMUNICATION D'UNE ANTENNE CONNECTÉE À UN COMPOSANT ADAPTÉ À UNE COMMUNICATION SANS CONTACT.**

SYSTEM UND VORRICHTUNG ZUR STEUERUNG DER ABSTIMMUNG AUF EINE KOMMUNIKATIONSFREQUENZ EINER ANTENNE, DIE MIT EINER KOMPONENTE VERBUNDEN IST, DIE FÜR EINE KONTAKTLOSE KOMMUNIKATION AUSGELEGT IST.

SYSTEM AND APPARATUS FOR CONTROLLING THE TUNING TO A COMMUNICATION FREQUENCY OF AN ANTENNA CONNECTED TO A COMPONENT ADAPTED FOR CONTACTLESS COMMUNICATION.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.06.2015 FR 1554987**

(43) Date de publication de la demande:
**07.12.2016 Bulletin 2016/49**

(73) Titulaire: **STMicroelectronics (Rousset) SAS 13790 Rousset (FR)**

(72) Inventeur: **TRAMONI, Alexandre 83330 Le Beausset (FR)**

(74) Mandataire: **Casalonga Casalonga & Partners Bayerstraße 71/73 80335 München (DE)**

(56) Documents cités:
**EP-A1- 2 824 846      US-A1- 2014 106 668 US-A1- 2015 065 043**

EP 3 101 816 B1

**Description**

Des modes de mise en œuvre et de réalisation de l'invention concernent la communication sans fil ou sans contact utilisant des composants électroniques connectés à une antenne, notamment des composants configurés pour échanger des informations avec un dispositif externe via ladite antenne selon un protocole de communication du type sans contact et plus particulièrement le contrôle d'un accord fréquentiel de l'antenne, c'est-à-dire un accord de l'antenne sur une fréquence compatible avec une communication sans contact des informations. Une telle fréquence peut être par exemple une fréquence de résonance égale à une fréquence de porteuse, par exemple 13,56 MHz, ou bien une fréquence de résonance contenue dans une plage admissible autour de la fréquence de porteuse.

De tels composants sont plus simplement appelés, par abus de langage « composants sans contact » et peuvent être par exemple des composants dits « NFC », c'est-à-dire des composants compatibles avec la technologie NFC (« Near Field Communication »).

Le composant NFC peut être par exemple un microcontrôleur NFC.

L'acronyme NFC (« Near Field Communication ») désigne une technologie de communication sans fil haute fréquence faible distance, qui permet des échanges de données entre deux dispositifs sans contact sur une faible distance, par exemple 10 cm.

La technologie NFC est normalisée dans les documents ISO/IEC 18 092 et ISO/IEC 21 481 mais incorpore une variété de normes préexistantes incluant les protocoles type A et type B de la norme ISO/IEC 14 443. Un exemple d'art antérieur peut être trouvé dans US 2014/106668A1.

Un microcontrôleur NFC peut être généralement utilisé soit en mode « lecteur » ou en mode « carte », pour dialoguer avec un autre dispositif sans contact, par exemple en utilisant un protocole de communication sans contact tel que le protocole type A de la norme ISO/IEC 14 443.

Dans le mode « lecteur », le composant NFC agit comme un lecteur vis-à-vis du dispositif externe sans contact qui peut être alors une carte ou bien une étiquette. Dans le mode lecteur, le composant NFC peut alors lire le contenu du dispositif externe et écrire des informations dans le dispositif externe.

Dans le mode « carte », le composant NFC se comporte alors comme une carte ou une étiquette et dialogue avec le dispositif externe qui est cette fois-ci un lecteur.

Un microcontrôleur NFC peut être par exemple incorporé dans un téléphone mobile cellulaire, et ce dernier peut être utilisé alors, outre sa fonction téléphonique classique, pour échanger des informations avec le dispositif externe sans contact.

De nombreuses applications sont ainsi possibles, telles que le franchissement de barrière de péage dans les transports (le téléphone mobile agit comme ticket de transport) ou bien des applications de paiement (le téléphone mobile agit comme carte de crédit).

Les composants sans contact, tels que les composants NFC, sont généralement connectés à l'antenne par l'intermédiaire d'un circuit d'adaptation d'impédance dans le but d'optimiser la communication radiofréquence. Et, ces composants externes utilisés dans ce circuit d'adaptation d'impédance par exemple des bobines et des condensateurs, doivent être très bien dimensionnés, de façon à permettre un bon accord fréquentiel de l'antenne, par exemple sur une fréquence de porteuse, (par exemple 13,56 MHz), et assurer ainsi le maximum de performance.

En général il existe des différences entre les valeurs théoriques de ces composants externes et de l'antenne et les valeurs réelles de ceux-ci lorsqu'ils sont effectivement réalisés et physiquement connectés au composant NFC. Ceci est notamment dû aux dispersions technologiques des composants externes et de l'antenne utilisés qui peuvent être d'autant plus importantes que les composants externes, notamment, sont de moindre qualité.

Il en résulte alors un désaccord fréquentiel de l'antenne.

Ce désaccord fréquentiel de l'antenne peut aussi être provoqué par le couplage magnétique avec l'antenne d'un autre objet NFC.

Selon un mode de mise en œuvre et de réalisation il est proposé de contrôler de façon simple l'accord fréquentiel de l'antenne de façon à limiter autant que possible le risque de désaccord fréquentiel de l'antenne qui conduirait à une mauvaise communication des informations voire à une interruption de cette communication.

Généralement le circuit d'adaptation d'impédance incorpore un filtre destiné à filtrer les interférences électromagnétiques et communément désigné par l'homme du métier sous l'acronyme anglosaxon de filtre «EMI» (Electro-Magnetic Interference). Plus précisément ce filtre EMI, qui est généralement un filtre inductif capacitif (filtre LC), permet de réduire autant que possible les émissions d'harmoniques élevées du signal de transmission, typiquement à 13,56 MHz.

Selon un mode de mise en œuvre et de réalisation il est proposé de modifier l'impédance du filtre EMI pour compenser un désaccord fréquentiel de l'antenne dû notamment aux dispersions technologiques des composants externes et/ou de l'antenne et/ou à l'effet de couplage électromagnétique.

Selon un aspect il est proposé un procédé de contrôle d'un accord fréquentiel d'une antenne connectée à un composant via un réseau inductif capacitif comportant des moyens de filtrage d'interférences électromagnétiques, le composant étant configuré pour recevoir et/ou émettre des informations via ladite antenne selon un protocole de communication sans contact, le procédé comprenant une modification de l'impédance des moyens de filtrage d'interférences électromagnétiques.

Selon un mode de mise en œuvre, les moyens de filtrage sont configurables et capables de prendre différentes configurations de filtrage ayant toutes sensiblement une même fréquence de coupure de référence et ladite modification de l'impédance des moyens de filtrage électromagnétique comprend une sélection de la configuration de filtrage pour laquelle le courant circulant dans ladite antenne a la plus grande valeur.

Selon un autre aspect il est proposé un système comprenant une antenne, un composant configuré pour recevoir et/ou émettre des informations via ladite antenne selon un protocole de communication sans contact et un réseau inductif capacitif connecté entre l'antenne et le composant et comportant des moyens de filtrage d'interférences électromagnétiques.

Selon cet aspect le système comprend en outre des moyens de traitement configurés pour modifier l'impédance des moyens de filtrage d'interférences électromagnétiques de façon à contrôler un accord fréquentiel de l'antenne.

Selon un mode de réalisation les moyens de filtrage d'interférences électromagnétiques sont configurables et capables de prendre différentes configurations de filtrage ayant toutes sensiblement une même fréquence de coupure de référence et les moyens de traitement comportent lesdits moyens de filtrage d'interférences électromagnétiques configurables et des moyens de contrôle configurés pour sélectionner la configuration de filtrage pour laquelle le courant circulant dans ladite antenne a la plus grande valeur.

Selon un mode de réalisation les moyens de filtrage configurables possèdent une inductance de référence et une valeur capacitive de référence associées à ladite fréquence de coupure de référence ;

les moyens de filtrage configurables comportent un circuit inductif capacitif configurable connecté entre le composant et les bornes de l'antenne et un circuit capacitif configurable connecté entre le circuit inductif capacitif et un point froid, par exemple la masse ;

le circuit inductif capacitif configurable comporte un module inductif capacitif configurable par un premier jeu de circuits capacitifs auxiliaires commutables et le circuit capacitif configurable comporte un module capacitif configurable par un deuxième jeu de circuits capacitifs auxiliaires commutables ;

et dans chaque configuration de filtrage l'impédance du circuit inductif capacitif à ladite fréquence de coupure est égale à ladite inductance de référence et l'impédance du circuit capacitif à ladite fréquence de coupure est égale à ladite valeur capacitive de référence.

Selon un mode de réalisation, dans l'une des configurations de filtrage, aucun circuit capacitif auxiliaire n'est connecté aux bornes du module inductif capacitif et aucun circuit capacitif auxiliaire n'est connecté aux bornes du module capacitif, et dans chaque autre configuration de filtrage un circuit capacitif auxiliaire du premier jeu est connecté aux bornes du module inductif capacitif et un circuit capacitif auxiliaire du deuxième jeu est connecté aux bornes du module capacitif.

Les premier et deuxième jeux de circuits capacitifs auxiliaires commutables sont avantageusement situés à l'intérieur du composant.

A cet égard et selon un mode de réalisation, le composant comporte une première borne de sortie et une deuxième borne de sortie pour l'émission de données vers l'antenne, et une première et une deuxième bornes auxiliaires ;

le module inductif capacitif comprend
un premier bloc connecté entre la première borne de sortie et une première borne de l'antenne et comportant un premier élément inductif principal connecté en parallèle aux bornes d'un premier condensateur principal, et
un deuxième bloc connecté entre la deuxième borne de sortie et une deuxième borne de l'antenne et comportant un deuxième élément inductif principal connecté en parallèle aux bornes d'un deuxième condensateur principal ;
le module capacitif comprend un premier condensateur additionnel connecté en série entre le premier bloc et ledit point froid et un deuxième condensateur additionnel connecté en série entre le deuxième bloc et ledit point froid ;
le premier jeu de circuits capacitif auxiliaires comprend un premier ensemble de condensateurs auxiliaires commutables connectés en parallèle entre la première borne auxiliaire et la première borne de sortie et un deuxième ensemble de condensateurs auxiliaires commutables connectés en parallèle entre la deuxième borne auxiliaire et la deuxième borne de sortie, et
le deuxième jeu de circuits capacitifs auxiliaires comprend un troisième ensemble de condensateurs auxiliaires commutables connectés en parallèle entre la première borne auxiliaire et le point froid et un quatrième ensemble de condensateurs auxiliaires commutables connectés en parallèle entre la deuxième borne auxiliaire et le point froid.

Selon un mode de réalisation le composant comprend une première et une deuxième bornes d'entrée connectées aux deux bornes de l'antenne pour la réception de données provenant de l'antenne, et les moyens de contrôle comprennent un détecteur configuré pour détecter la tension la tension la plus grande aux bornes de l'antenne.

Le composant est avantageusement capable de fonctionner en mode lecteur ou en mode carte.

Selon un autre aspect il est proposé un appareil de communication sans fil, par exemple un téléphone mobile cellulaire capable de fonctionner en mode lecteur ou en mode carte, ou bien un lecteur proprement dit, comprenant un système tel que défini ci-avant.

D'autres avantages et caractéristiques de l'invention apparaîtront à la description détaillée de modes de réalisation et de mise en œuvre, nullement limitatifs, et des dessins annexés sur lesquels :

La figure 1 illustre un exemple d'art antérieur, et
les figures 2 à 5 illustrent schématiquement différents modes de mise en œuvre et de réalisation de l'invention.

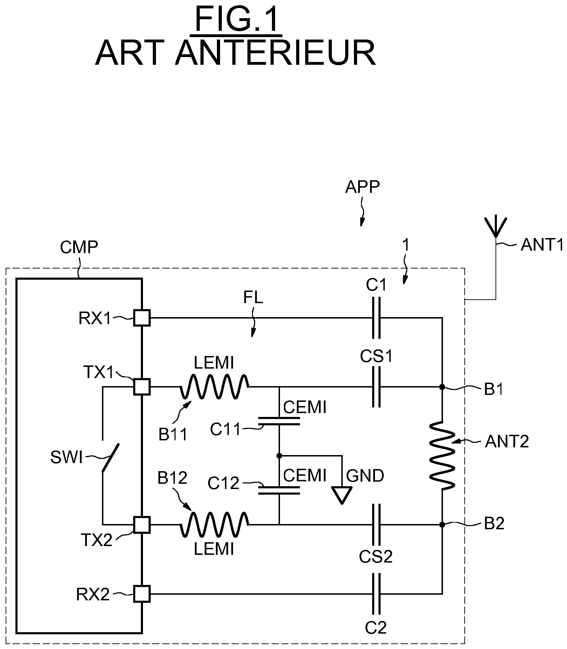

Sur la figure 1, la référence APP désigne un appareil de communication, par exemple un téléphone mobile cellulaire, équipé d'une antenne ANT1 pour l'établissement des communications téléphoniques.

Dans le cas présent, l'appareil APP comporte également un système NFC classique comportant un composant CMP sans contact du type NFC, par exemple un microcontrôleur NFC.

Le microcontrôleur CMP possède de façon classique deux contacts TX1, TX2 utilisables en mode lecteur et deux autres contacts RX1, RX2 utilisables en mode lecteur et en mode carte.

A cet égard, le composant CMP peut être équipé d'un commutateur interne SWI permettant de court-circuiter les bornes TX1 et TX2 pour un fonctionnement en mode carte ou de ne pas court-circuiter les bornes TX1 et TX2 pour autoriser un fonctionnement en mode lecteur.

Une antenne ANT2, par exemple un enroulement inductif, est utilisable pour la communication sans contact avec un dispositif externe. Une première borne B1 de cette antenne ANT2 est connectée aux contacts TX1 et RX1 tandis que la deuxième borne B2 de l'antenne ANT2 est connectée aux contacts TX2 et RX2.

Enfin, un circuit externe d'adaptation d'impédance est connecté entre l'antenne ANT2 et le composant CMP.

Plus précisément, de façon classique et connue en soi, ce circuit d'adaptation d'impédance peut comporter un filtre FL destiné à filtrer les interférences électromagnétiques (filtre EMI).

Ce filtre FL est classiquement un filtre du type LC comportant ici une bobine B11 connectée en série, entre le contact TX1 et la masse GND, avec un condensateur C11.

Le filtre FL comporte également une bobine B12 connectée en série, entre le contact TX2 et la masse GND, avec un condensateur C12.

L'inductance de la bobine B11 et de la bobine B12 est égale à LEMI tandis que la valeur capacitive des condensateurs C11 et C12 est égale à CEMI.

Ces deux valeurs forment respectivement une inductance de référence et une valeur capacitive de référence pour le filtre EMI.

Ces valeurs de référence sont associées à une fréquence de coupure du filtre EMI, désigné ci-après fréquence de coupure de référence (par exemple 20 MHz pour une fréquence de porteuse de 13,56 MHz).

Et, ces valeurs de référence LEMI et CEMI sont choisies pour former un circuit résonnant aux alentours de la fréquence de coupure de référence f du filtre FL.

Ainsi, les valeurs de référence CEMI et LEMI satisfont à la formule (1) ci-dessous.

$$CEMI = \frac{1}{\left(2\pi f\right)^2 LEMI} \qquad (1)$$

Les circuits d'adaptation d'impédance comportent aussi les condensateurs C1, C2, CS1 et CS2.

Les condensateurs C1 et C2 forment un diviseur capacitif aux bornes des contacts RX1 et RX2.

Les condensateurs CS1 et CS2 sont quant à eux choisis pour maximiser le courant dans l'antenne ANT2 de façon à augmenter l'amplitude du champ électromagnétique.

De façon à avoir un fonctionnement optimisé, le composant CMP forme avec l'antenne ANT2 et le circuit externe de l'adaptation d'impédance un circuit résonant ayant une fréquence de résonance égale à la fréquence de porteuse, par exemple 13,56 MHz dans le cas d'un protocole de communication type A ou type B défini dans la norme ISO/IEC 14443.

Cela étant, dans le cas d'un protocole de transmission type A, des fréquences de résonance contenues dans une plage de +/- 15% autour de la fréquence de porteuse peuvent être considérées comme des fréquences de résonance acceptables.

Cela étant, lors de la réalisation effective du circuit externe d'adaptation d'impédance, les inductances réelles et les valeurs capacitives réelles des différents éléments de ce circuit externe d'adaptation d'impédance peuvent varier par rapport aux valeurs théoriques en raison notamment de la dispersion technologique des bobines et condensateurs utilisés.

L'antenne ANT2 peut alors ne plus être accordée sur une fréquence de résonance acceptable permettant une communication correcte des informations.

Ce désaccord fréquentiel de l'antenne peut également être produit par le couplage électromagnétique avec l'antenne du dispositif externe communiquant avec le composant CMP.

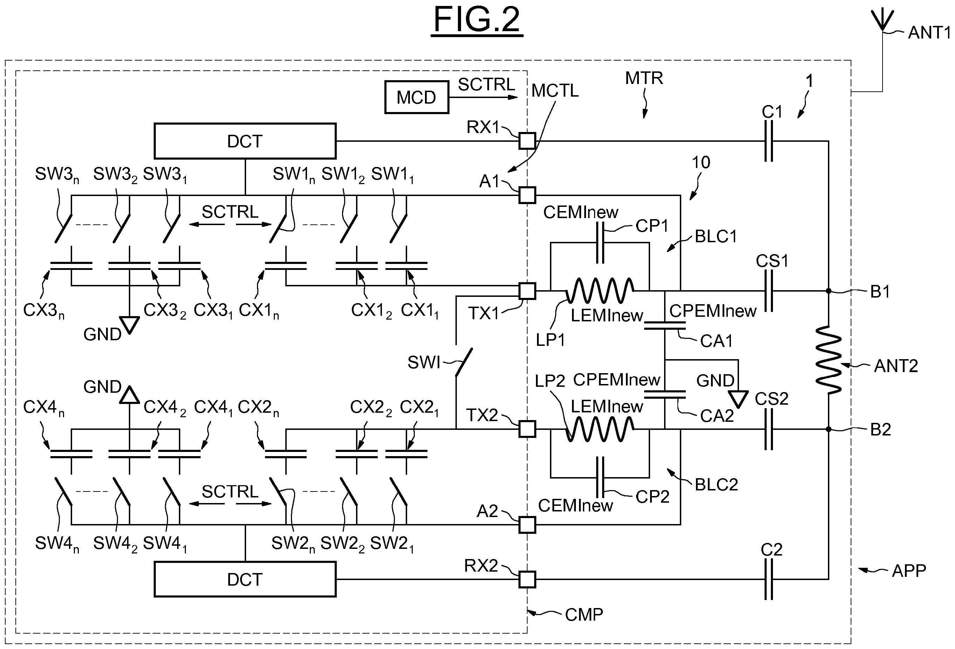

De façon à pallier cet inconvénient et contrôler un accord fréquentiel de l'antenne ANT2 sur une fréquence de résonance acceptable, il est prévu, selon un mode de réalisation de l'invention illustré sur la figure 2, que le système comprenant l'antenne ANT2, le composant CMP et le réseau inductif capacitif 1 connecté entre l'antenne ANT2 et le composant CMP comporte en outre des moyens de traitement MTR configurés pour modifier l'impédance des moyens de filtrage d'interférences électromagnétiques de façon à contrôler un accord fréquentiel de l'antenne sur une fréquence de résonance acceptable (fréquence égale ou voisine de la fréquence de porteuse par exemple), par exemple 13,56 MHz.

A des fins de simplification, seules les différences entre la figure 2 et la figure 1 seront maintenant décrites.

On rappelle ici que les contacts TX1 et TX2 forment une première et une borne de sortie du composant CMP pour l'émission de données vers l'antenne ANT2 tandis que les contacts RX1 et RX2 forment deux bornes d'entrée du composant pour la réception de données provenant de l'antenne ANT2.

Les moyens de filtrage d'interférences électromagnétique 10 sont cette fois-ci configurables et capables de prendre différentes configurations de filtrage ayant toutes sensiblement la même fréquence de coupure de référence f, par exemple 20 MHz.

Les moyens de traitement MTR comportent alors ces moyens de filtrage configurables 10 et des moyens de contrôle MCTL configurés pour sélectionner la configuration de filtrage pour laquelle le courant circulant dans l'antenne ANT2 a la plus grande valeur.

On va maintenant décrire plus en détail les moyens de filtrage configurables 10.

Ceux-ci comportent un premier bloc BLC1 connecté entre la première borne de sortie (contact TX1) du composant et la première borne B1 de l'antenne ANT2. Ce premier bloc BLC1 comporte un premier élément inductif principal LP1 connecté en parallèle aux bornes d'un premier condensateur principal CP1.

Un deuxième bloc BLC2 est connecté entre la deuxième borne de sortie (contact TX2) du composant CMP et la deuxième borne B2 de l'antenne ANT2. Ce deuxième bloc BLC2 comporte un deuxième élément inductif principal LP2 connecté en parallèle aux bornes d'un deuxième condensateur principal CP2.

Les éléments inductifs principaux LP1 et LP2 sont avantageusement identiques. De même, les condensateurs principaux CP1 et CP2 sont également avantageusement identiques.

Les deux blocs BLC1 et BLC2 forment ensemble un module inductif capacitif.

Les moyens de filtrage configurables 10 comportent également un premier condensateur additionnel connecté en série entre le premier bloc BLC1 et la masse GND et un deuxième condensateur additionnel CA2 connecté en série entre le deuxième bloc BLC2 et la masse GND.

Ces deux condensateurs additionnels CA1 et CA2 forment un module capacitif.

Comme on le voit par ailleurs sur la figure 2, le composant CMP comporte également deux contacts auxiliaires A1 et A2 formant respectivement une première et une deuxième bornes auxiliaires.

Les moyens de filtrage configurables 10 comportent également un premier ensemble de condensateurs auxiliaires $CX1_1$-$CX1_n$ respectivement commutables par l'intermédiaire de commutateurs $SW1_1$-$SW1_n$, par exemple des transistors MOS.

Ce premier ensemble de condensateurs auxiliaires commutables $CX1_1$-$CX1_n$ sont connectés en parallèle entre la première borne auxiliaire A1 et la première borne de sortie TX1 du composant.

Les moyens de filtrage 10 comportent également un deuxième ensemble de condensateurs auxiliaires $CX2_1$-$CX2_n$ respectivement commutables par l'intermédiaire de commutateurs $SW2_1$-$SW2_n$, et connectés en parallèle entre la deuxième borne auxiliaire A2 et la deuxième borne de sortie TX2 du composant CMP.

Ce premier ensemble de condensateurs auxiliaires commutables et ce deuxième ensemble de condensateurs auxiliaires commutables forment un premier jeu de circuits capacitifs auxiliaires.

Deux condensateurs auxiliaires homologues $CX1_i$ et $CX2_i$ ont par exemple mais pas nécessairement la même valeur capacitive.

Les moyens de filtrage configurables 10 comportent également un troisième ensemble de condensateurs auxiliaires $CX3_i$-$CX3_n$ respectivement commutables par l'intermédiaire de commutateurs $SW3_i$-$SW3_n$, et connectés en parallèle entre la première borne auxiliaire A1 et la masse GND.

Les moyens de filtrage configurables 10 comportent également un quatrième ensemble de condensateurs auxiliaires $CX4_1$-$CX4_n$ respectivement commutables par l'intermédiaire de commutateurs $SW4_1$-$SW4_n$, et connectés en parallèle entre la deuxième borne auxiliaire A2 et la masse GND.

Là encore, deux condensateurs homologues $CX3_i$, $CX4_i$ ont la par exemple mais pas nécessairement même valeur capacitive.

Par ailleurs, deux condensateurs homologues $CX1_i$ et $CX3_i$ peuvent ou non avoir la même valeur capacitive.

Et, les deux condensateurs homologues $CX2_i$ et $CX4_i$ peuvent également avoir ou non la même valeur capacitive.

Ce troisième ensemble de condensateurs auxiliaires commutables et ce quatrième ensemble de condensateurs auxiliaires commutables forment un deuxième jeu de circuits capacitifs auxiliaires.

Le composant CMP incorpore donc, outre les moyens adaptés au traitement des informations reçues ou émises, tous les ensembles de condensateurs auxiliaires $CX1_i$, $CX2_i$, $CX3_i$, $CX4_i$. Il est en effet préférable de placer les condensateurs auxiliaires à l'intérieur du composant CMP afin de ne pas obliger l'utilisateur à les ajouter à l'extérieur du produit. Le cout d'implémentation du circuit s'en trouvera diminué pour l'utilisateur.

Les moyens de contrôle MCTL comportent également un module MCD, à base par exemple de circuits logiques, destiné à émettre un signal de contrôle SCTRL pour commander les différents commutateurs SW1-SW4.

Ceci va permettre de modifier la configuration des moyens de filtrage comme cela va maintenant être expliqué plus en détail.

Sur la figure 2, tous les commutateurs SW1-SW4 ont été représentés en position ouverte correspondant à une première configuration des moyens de filtrage configurables 10.

Dans cette première configuration, les moyens de filtrage 10 sont formés par le premier bloc BLC1 et le deuxième bloc BLC2.

Pour passer dans une autre configuration de filtrage, les moyens de commande MC2 commandent les commutateurs de façon à par exemple fermer simultanément les quatre commutateurs homologues $SW1_i$, $SW2_i$, $SW3_i$ et $SW4_i$.

De ce fait, on rajoute le condensateur auxiliaire $CX1_i$ en parallèle avec le premier condensateur principal CP1et on rajoute le condensateur auxiliaire $CX2_i$ en parallèle avec le deuxième condensateur principal CP2.

De même, on rajoute le condensateur auxiliaire $CX3_i$ en parallèle avec le premier condensateur additionnel CA1 et on rajoute le condensateur auxiliaire $CX4_i$ en parallèle avec le deuxième condensateur additionnel CA2.

En ajoutant $CX1_i$ (resp. CX2i) la valeur équivalente de l'inductance des moyens de filtrage 10 est diminuée. Pour garder la même fréquence de coupure des moyens de filtrage 10, on ajoute $CX3_i$ (resp $CX4_i$) de façon que la variation de fréquence de coupure des moyens de filtrage 10 due à l'ajout de CX1i (resp. CX2i) soit autant que possible compensée par l'ajout de $CX3_i$ (resp $CX4_i$).

L'inductance de chaque élément inductif principal LP1, LP2 est égale à LEMInew.

Par ailleurs, dans chaque configuration de filtrage, la valeur capacitive connectée en parallèle aux bornes de chaque élément inductif principal LP1 ou LP2 est égale à CEMInew.

Bien entendu, cette valeur capacitive CEMInew est différente selon la configuration de filtrage en fonction du ou des condensateurs effectivement connectés aux bornes de chaque élément principal LP1 ou LP2.

Par ailleurs, la valeur capacitive connectée en série entre chaque bloc BLC1, BLC2 et la masse GND est égale à CPEMInew.

Là encore, cette valeur capacitive CPEMInew diffère pour chaque configuration de filtrage en fonction du ou des condensateurs connectés en parallèle entre chaque bloc BLC1, BLC2 et la masse GND.

Mais, dans chaque configuration de filtrage, l'impédance Z de chaque bloc inductif capacitif formé par le bloc BLC1 ou BLC2 auquel on a éventuellement rajouté un condensateur auxiliaire, est donnée par la formule (2) ci-dessous :

$$Z = \frac{LEMInew.\omega}{1 - LEMInew.CEMInew.\omega^2} \qquad (2)$$

dans laquelle $\omega$ désigne la pulsation correspondant à la fréquence de coupure de référence f du filtre d'interférences électromagnétiques, par exemple 20 MHz.

Et, on choisira la valeur LEMInew et les valeurs capacitives des différents condensateurs principaux et auxiliaires de façon que cette impédance Z soit, dans chaque configuration de filtrage, égale à l'inductance de référence LEMI.

Par ailleurs, la valeur capacitive CPEMInew est définie par la formule (3) ci-dessous :

$$CPEMInew = \frac{1}{(2\pi f)^2 LEMI} \qquad (3)$$

dans laquelle f désigne la fréquence de coupure de référence du filtre d'interférences électromagnétiques.

Là encore, les valeurs capacitives des différents condensateurs additionnels et auxiliaires sont choisies de façon à satisfaire à cette condition pour chaque configuration de filtrage.

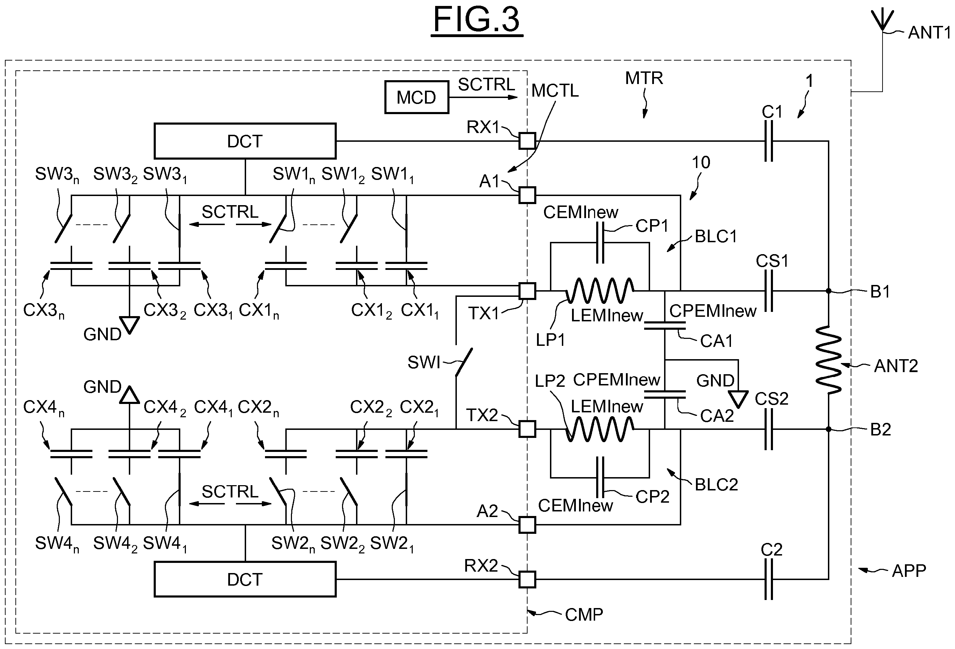

La figure 3 illustre à titre d'exemple une autre configuration de filtrage obtenue par fermeture des commutateurs $SW1_1$, $SW3_1$, $SW2_1$ et $SW4_1$. De ce fait, dans cette configuration de filtrage, le condensateur additionnel $CX1_i$ est connecté en parallèle aux bornes du condensateur principal CP1 et le condensateur auxiliaire $CX3_1$ est connecté en

parallèle aux bornes du condensateur additionnel CA1.

De même, le condensateur auxiliaire $CX2_1$ est connecté en parallèle aux bornes du condensateur principal CP2 et le condensateur auxiliaire $CX4_1$ aux bornes du condensateur additionnel CA2.

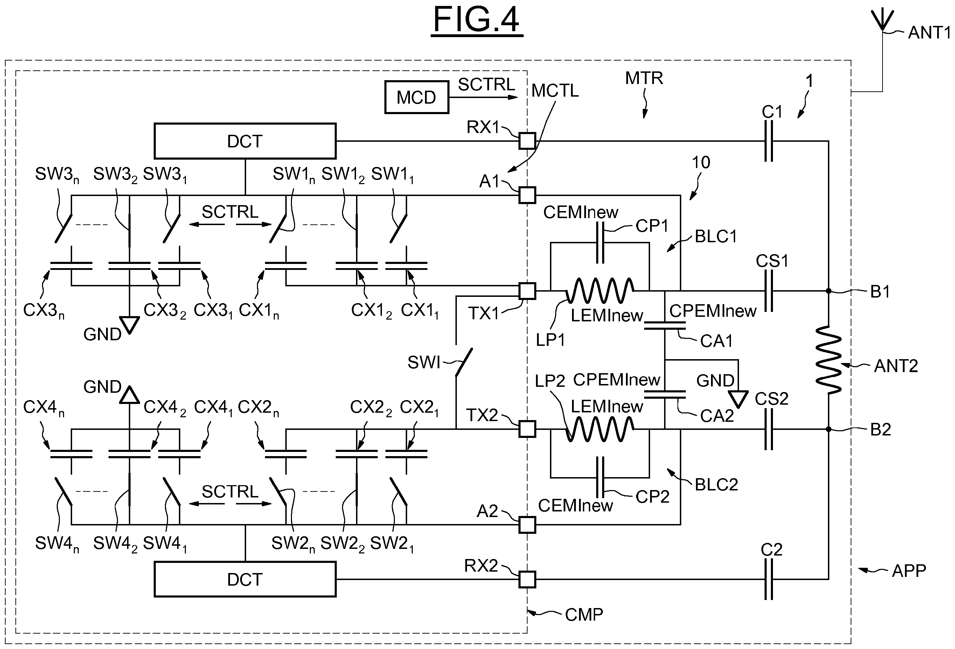

Sur la figure 4, une autre configuration de filtrage est illustrée, obtenue par la fermeture cette fois-ci des commutateurs $SW1_2$, $SW3_2$, $SW2_2$ et $SW4_2$.

Dans cette configuration de filtrage, ce sont cette fois-ci les condensateurs additionnels $CX1_2$ et $CX2_2$ qui sont connectés en parallèle aux bornes des condensateurs principaux CP1 et CP2 et les condensateurs auxiliaires $CX3_2$ et $CX4_2$ qui sont connectés en parallèle aux bornes de condensateurs additionnels CA1 et CA2.

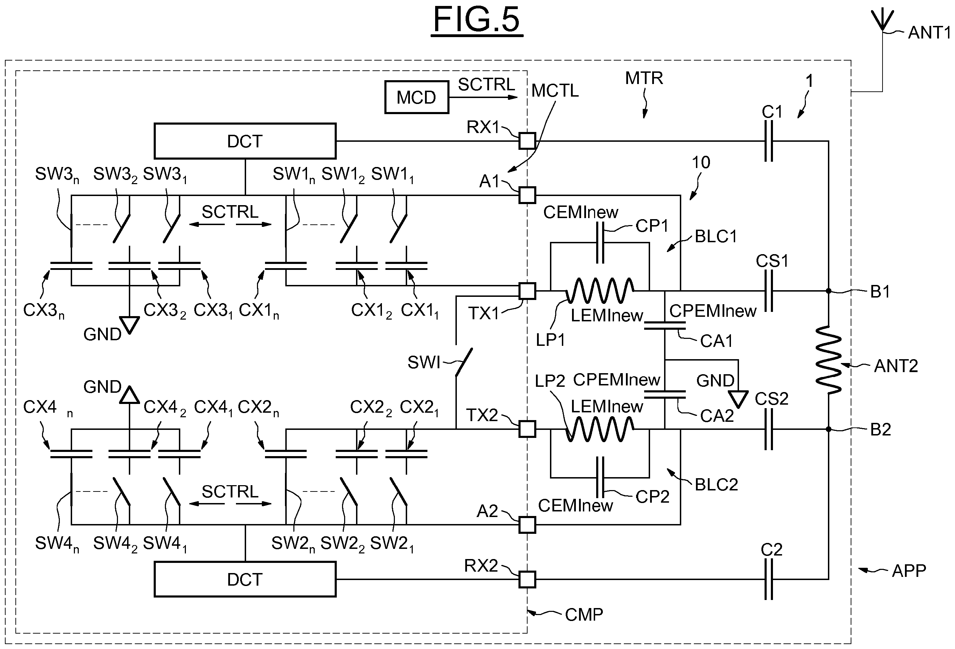

Sur la figure 5, encore une autre configuration de filtrage est illustré, obtenue par la fermeture cette fois-ci des commutateurs $SW1_n$, $SW3_n$, $SW2_n$ et $SW4_n$.

Dans cette configuration de filtrage, ce sont cette fois-ci les condensateurs additionnels $CX1_n$ et $CX2_n$ qui sont connectés en parallèle aux bornes des condensateurs principaux CP1 et CP2 et les condensateurs auxiliaires $CX3_n$ et $CX4_n$ qui sont connectés en parallèle aux bornes de condensateurs additionnels CA1 et CA2.

En pratique, une fois le système alimenté, les moyens de contrôle MCTL vont configurer les moyens de filtrage 10 successivement dans leurs configurations de filtrage successives de façon à déterminer la configuration de filtrage conduisant à la plus grande valeur de courant circulant dans l'antenne ANT2.

Cette configuration de filtrage correspondra donc à celle conduisant au meilleur accord de l'antenne ANT2 sur une fréquence de résonance égale ou proche de celle déterminée théoriquement, par exemple 13,56 MHz.

Bien entendu, le nombre de condensateurs auxiliaires, et par conséquent le nombre de configurations de filtrage, résultent d'un compromis entre l'encombrement surfacique et la granularité souhaitée dans la modification de l'impédance des moyens de filtrage électromagnétique 10.

De façon à déterminer la valeur de courant la plus élevée circulant dans l'antenne ANT2, les moyens de contrôle peuvent comporter par exemple un ou ici deux détecteurs DCT connectés entre les bornes RX1 et RX2 et configuré pour détecter la différence de tension la plus grande aux bornes de l'antenne ANT2.

En pratique, le choix de la configuration de filtrage pourra être effectué de façon statique une fois le système effectivement réalisé avec les différents composants soudés.

Cela étant, il serait également envisageable d'effectuer le choix de la configuration de façon dynamique, c'est-à-dire par exemple en présence d'un dispositif externe effectivement couplé à l'antenne ANT2, par exemple au début de chaque session de communication d'informations.

Bien entendu ce qui vient d'être décrit est valable en mode lecteur (commutateur SWI ouvert) ou en mode carte (commutateur SWI fermé).

Ainsi, bien que l'on ait décrit la commutation d'un seul condensateur auxiliaire par ensemble de condensateurs auxiliaires pour définir une configuration de filtrage, il serait tout à fait envisageable de commuter plusieurs condensateurs auxiliaires au sein d'un même ensemble.

De même les valeurs capacitives de deux transistors homologues $CX1_i$ et $CX3_i$ (ou $CX2_i$ et $CX4_i$) ne sont pas nécessairement identiques.

Pour définir une configuration on peut choisir de fermer deux ou plus de deux commutateurs non nécessairement homologues.

En fait peu importe la façon (nombres de condensateurs auxiliaires utilisés, nombre de commutateurs fermés ou ouverts, ...) dont est réalisée chaque configuration de filtrage pour autant que l'impédance Z définie par la formule (2) ci-dessus soit, dans chaque configuration de filtrage, égale ou sensiblement égale à l'inductance de référence LEMI et que la valeur capacitive CPEMInew soit alors obtenue par la formule (3) ci-dessus.

Enfin, il n'est pas absolument nécessaire que les valeurs capacitives de deux transistors homologues $CX1_i$ et $CX2_i$ (ou $CX3_i$ et $CX4_i$) soient identiques, notamment si on utilise deux détecteurs DCT respectivement associés aux condensateurs $CX1_i$ et $CX3_i$ d'une part et $CX2_i$ et $CX4_i$ d'autre part.

**Revendications**

1. Système, comprenant une antenne (ANT2), un composant (CMP) configuré pour recevoir et/ou émettre des informations via ladite antenne selon un protocole de communication sans contact et un réseau inductif capacitif (1) connecté entre l'antenne (ANT2) et le composant (CMP) et comportant des moyens de filtrage d'interférences électromagnétiques (10), **caractérisé en ce qu'**il comprend des moyens de traitement (MTR) configurés pour modifier l'impédance des moyens de filtrage d'interférences électromagnétiques (10) de façon à contrôler un accord fréquentiel de l'antenne dans lequel les moyens de filtrage (10) sont configurables et capables de prendre différentes configurations de filtrage ayant toutes sensiblement une même fréquence de coupure de référence (f) et les moyens de traitement (MTR) comportent lesdits moyens de filtrage configurables (10) et des moyens de contrôle (MCTL) configurés pour sélectionner la configuration de filtrage pour laquelle le courant circulant dans ladite antenne (ANT2) a la plus grande valeur, et dans lequel les moyens de filtrage (10) possèdent une inductance de référence (LEMI) et une valeur capacitive de référence (CEMI) associées à ladite fréquence de coupure de référence (f), les moyens de filtrage (10) comportent un circuit inductif capacitif configurable connecté entre le composant (CMP) et les bornes de l'antenne (ANT2) et un circuit capacitif configurable connecté entre le circuit inductif capacitif et un point froid (GND), le circuit inductif capacitif configurable comportant un module inductif capacitif (BLC1, BLC2) configurable par un premier jeu de circuits capacitifs auxiliaires commutables (CX1$_i$, CX2$_i$) et le circuit capacitif configurable comportant un module capacitif (CA1, CA2) configurable par un deuxième jeu de circuits capacitifs auxiliaires commutables (CX3$_i$, CX4$_i$), et dans chaque configuration de filtrage l'impédance du circuit inductif capacitif à ladite fréquence de coupure est égale à ladite inductance de référence (LEMI) et l'impédance du circuit capacitif à ladite fréquence de coupure est égale à ladite valeur capacitive de référence (CEMI).

2. Système selon la revendication 1, dans lequel dans l'une des configurations de filtrage, aucun circuit capacitif auxiliaire n'est connecté aux bornes du module inductif capacitif (BLC1, BLC2) et aucun circuit capacitif auxiliaire n'est connecté aux bornes du module capacitif (CA1, CA2), et dans chaque autre configuration de filtrage un circuit capacitif auxiliaire (CX1$_i$, CX2$_i$) du premier jeu est connecté aux bornes du module inductif capacitif et un circuit capacitif auxiliaire (CX3$_i$, CX4$_i$) du deuxième jeu est connecté aux bornes du module capacitif.

3. Système selon la revendication 1 ou 2, dans lequel les premier et deuxième jeux de circuits capacitifs auxiliaires commutables (CX1$_i$, CX2$_i$, CX3$_i$, CX4$_i$) sont situés à l'intérieur du composant (CMP).

4. Système selon la revendication 3, dans lequel le composant (CMP) comporte une première borne de sortie (TX1) et une deuxième borne de sortie (TX2) pour l'émission de données vers l'antenne, et une première et une deuxième bornes auxiliaires (A1 , A2),

le module inductif capacitif comprend un premier bloc (BLC1) connecté entre la première borne de sortie (TX1) et une première borne (B1) de l'antenne et comportant un premier élément inductif principal (LP1) connecté en parallèle aux bornes d'un premier condensateur principal (CP1) et un deuxième bloc (BLC2) connecté entre la deuxième borne de sortie (TX2) et une deuxième borne (B2) de l'antenne et comportant un deuxième élément inductif principal (LP2) connecté en parallèle aux bornes d'un deuxième condensateur principal (CP2),

le module capacitif comprend un premier condensateur additionnel (CA1) connecté en série entre le premier bloc (BLC1) et ledit point froid (GND) et un deuxième condensateur additionnel (CA2) connecté en série entre le deuxième bloc (BLC2) et ledit point froid (GND),

le premier jeu de circuits capacitif auxiliaires comprend un premier ensemble de condensateurs auxiliaires commutables (CX1$_i$) connectés en parallèle entre la première borne auxiliaire (A1) et la première borne de sortie (TX1) et un deuxième ensemble de condensateurs auxiliaires commutables (CX2$_i$) connectés en parallèle entre la deuxième borne auxiliaire (A2) et la deuxième borne de sortie (TX2), et

le deuxième jeu de circuits capacitifs auxiliaires comprend un troisième ensemble de condensateurs auxiliaires commutables (CX3$_i$) connectés en parallèle entre la première borne auxiliaire (A1) et le point froid (GND) et un quatrième ensemble de condensateurs auxiliaires commutables (CX4$_i$) connectés en parallèle entre la deuxième borne auxiliaire (A2) et le point froid (GND).

5. Système selon l'une des revendications précédentes, dans lequel le composant (CMP) comprend une première et une deuxième bornes d'entrée (RX1, RX2) connectées aux deux bornes de l'antenne pour la réception de données provenant de l'antenne, et les moyens de contrôle comprennent au moins un détecteur (DCT) configuré pour détecter la tension la tension la plus grande aux bornes de l'antenne.

6. Système selon l'une des revendications précédentes, dans lequel le composant (CMP) est capable de fonctionner en mode lecteur ou en mode carte.

7. Appareil de communication sans fil, comprenant un système selon l'une des revendications précédentes.

**Patentansprüche**

1. System, umfassend eine Antenne (ANT2), eine Komponente (CMP), die konfiguriert ist, um Informationen über die Antenne entsprechend einem kontaktlosen Kommunikationsprotokoll zu empfangen und/oder zu senden, und ein kapazitives, induktives Netzwerk (1), das zwischen der Antenne (ANT2) und der Komponente (CMP) angeschlossen ist, und Mittel zum Filtern von elektromagnetischen Interferenzen (10) beinhaltet, **dadurch gekennzeichnet, dass** es Verarbeitungsmittel (MTR) umfasst, die konfiguriert sind, um die Impedanz der Mittel zum Filtern von elektromagnetischen Interferenzen (10) zu ändern, um eine Frequenzübereinstimmung der Antenne, in der die Filtermittel (10) konfigurierbar und imstande sind, unterschiedliche Filterkonfigurationen einzunehmen, die allesamt eine im Wesentlichen gleiche Referenz-Grenzfrequenz (f) aufweisen, zu kontrollieren, und die Verarbeitungsmittel (MTR) die konfigurierbaren Filtermittel (10) und Kontrollmittel (MCTL) beinhalten, die konfiguriert sind, um die Filterkonfiguration auszuwählen, bei der der Strom, der in der Antenne (ANT2) fließt, den größten Wert aufweist, und wobei die Filtermittel (10) eine Referenz-Induktivität (LEMI) und einen kapazitiven Referenzwert (CEMI) besitzen, die der Referenz-Grenzfrequenz (f) zugewiesen sind, die Filtermittel (10) einen konfigurierbaren kapazitiven induktiven Kreis beinhalten, der zwischen der Komponente (CMP) und den Klemmen der Antenne (ANT2) angeschlossen ist, und einen konfigurierbaren kapazitiven Kreis, der zwischen dem kapazitiven induktiven Kreis und einem Cold Spot (GND) angeschlossen ist, der konfigurierbare kapazitive induktive Kreis ein kapazitives induktives Modul (BLC1, BLC2) beinhaltet, das durch einen ersten Satz an umschaltbaren kapazitiven Hilfskreisen ($CX1_i$, $CX2_i$) konfigurierbar ist, und der konfigurierbare kapazitive Kreis ein kapazitives Modul (CA1, CA2) beinhaltet, das durch einen zweiten Satz an umschaltbaren kapazitiven Hilfskreisen ($CX3_i$, $CX4_i$) konfigurierbar ist, und in jeder Filterkonfiguration die Impedanz des kapazitiven induktiven Kreises bei der Grenzfrequenz gleich der Referenz-Induktivität (LEMI) ist, und die Impedanz des kapazitiven Kreises bei der Grenzfrequenz gleich dem kapazitiven Referenzwert (CEMI) ist.

2. System nach Anspruch 1, wobei in der einen der Filterkonfigurationen kein kapazitiver Hilfskreis an die Klemmen des kapazitiven induktiven Moduls (BLC1, BLC2) angeschlossen ist, und kein kapazitiver Hilfskreis an die Klemmen des kapazitiven Moduls (CA1, CA2) angeschlossen ist, und in jeder anderen Filterkonfiguration ein kapazitiver Hilfskreis ($CX1_i$, $CX2_i$) des ersten Satzes an die Klemmen des kapazitiven induktiven Moduls angeschlossen ist, und ein kapazitiver Hilfskreis ($CX3_i$, $CX4_i$) des zweiten Satzes an die Klemmen des kapazitiven Moduls angeschlossen ist.

3. System nach Anspruch 1 oder 2, wobei sich der erste und zweite Satz an umschaltbaren kapazitiven Hilfskreisen ($CX1_i$, $CX2_i$, $CX3_i$, $CX4_i$) im Inneren der Komponente (CMP) befinden.

4. System nach Anspruch 3, wobei die Komponente (CMP) eine erste Ausgangsklemme (TX1) und eine zweite Ausgangsklemme (TX2) zum Senden von Daten zur Antenne, und eine erste und eine zweite Hilfsklemme (A1, A2) beinhaltet,

das kapazitive induktive Modul einen ersten Block (BLC1) umfasst, der zwischen der ersten Ausgangsklemme (TX1) und einer ersten Klemme (B1) der Antenne angeschlossen ist, und ein erstes induktives Hauptelement (LP1) beinhaltet, das parallel an die Klemmen eines ersten Hauptkondensators (CP1) angeschlossen ist, und einen zweiten Block (BLC2), der zwischen der zweiten Ausgangsklemme (TX2) und einer zweiten Klemme (B2) der Antenne angeschlossen ist, und ein zweites induktives Hauptelement (LP2) beinhaltet, das parallel an die Klemmen eines zweiten Hauptkondensators (CP2) angeschlossen ist,
das kapazitive Modul einen ersten zusätzlichen Kondensator (CA1) umfasst, der in Reihe zwischen dem ersten Block (BLC1) und dem Cold Spot (GND) angeschlossen ist, und einen zweiten zusätzlichen Kondensator (CA2), der in Reihe zwischen dem zweiten Block (BLC2) und dem Cold Spot (GND) angeschlossen ist,
wobei der erste Satz an kapazitiven Hilfskreisen eine erste Einheit an umschaltbaren Hilfskondensatoren ($CX1_i$) umfasst, die parallel zwischen der ersten Hilfsklemme (A1) und der ersten Ausgangsklemme (TX1) angeschlossen sind, und eine zweite Einheit an umschaltbaren Hilfskondensatoren ($CX2_i$), die parallel zwischen der zweiten Hilfsklemme (A2) und der zweiten Ausgangsklemme (TX2) angeschlossen sind,
und der zweite Satz an kapazitiven Hilfskreisen eine dritte Einheit an umschaltbaren Hilfskondensatoren ($CX3_i$) umfasst, die parallel zwischen der ersten Hilfsklemme (A1) und dem Cold Spot (GND) angeschlossen sind, und eine vierte Einheit an umschaltbaren Hilfskondensatoren ($CX4_i$), die parallel zwischen der zweiten Hilfsklemme (A2) und dem Cold Spot (GND) angeschlossen sind.

5. System nach einem der vorstehenden Ansprüche, wobei die Komponente (CMP) eine erste und eine zweite Eingangsklemme (RX1, RX2) umfasst, die an die beiden Klemmen der Antenne zum Empfangen von Daten angeschlossen sind, die von der Antenne stammen, und die Kontrollmittel mindestens einen Detektor (DCT) umfassen, der konfiguriert ist, um die größte Spannung an den Klemmen der Antenne zu detektieren.

6. System nach einem der vorstehenden Ansprüche, wobei die Komponente (CMP) imstande ist, im Lesermodus oder im Kartenmodus betrieben zu werden.

7. Drahtlose Kommunikationseinrichtung, umfassend ein System nach einem der vorstehenden Ansprüche.

**Claims**

1. A system, comprising an antenna (ANT2), a component (CMP) configured to receive and/or transmit information via said antenna according to a contactless communication protocol and a capacitive inductive network (1) connected between the antenna (ANT2) and the component (CMP) and including electromagnetic interference filtering means (10), **characterised in that** it comprises processing means (MTR) configured to modify the impedance of the electromagnetic interference filtering means (10) so as to control frequency tuning of the antenna, wherein the filtering means (10) are configurable and capable of assuming different filtering configurations all having substantially a same reference cut-off frequency (f) and the processing means (MTR) include said configurable filtering means (10) and control means (MCTL) configured to select the filtering configuration for which the current flowing in said antenna (ANT2) has the largest value, and wherein the filtering means (10) have a reference inductance (LEMI) and a reference capacitive value (CEMI) associated with said reference cut-off frequency (f), the filtering means (10) include a configurable capacitive inductive circuit connected between the component (CMP) and the terminals of the antenna (ANT2) and a configurable capacitive circuit connected between the capacitive inductive circuit and a point of minimum voltage (GND), the configurable capacitive inductive circuit including a capacitive inductive module (BLC1, BLC2) configurable by a first set of switchable auxiliary capacitive circuits ($CX1_i$, $CX2_i$) and the configurable capacitive circuit including a capacitive module (CA1, CA2) configurable by a second set of switchable auxiliary capacitive circuits ($CX3_i$, $CX4_i$), and in each filtering configuration the impedance of the capacitive inductive circuit at said cut-off frequency is equal to said reference inductance (LEMI) and the impedance of the capacitive circuit at said cut-off frequency is equal to said reference capacitive value (CEMI).

2. The system according to claim 1, wherein in one of the filtering configurations, no auxiliary capacitive circuit is connected to the terminals of the capacitive inductive module (BLC1, BLC2) and no auxiliary capacitive circuit is connected to the terminals of the capacitive module (CA1, CA2), and in each other filtering configuration an auxiliary capacitive circuit ($CX1_i$, $CX2_i$) of the first set is connected to the terminals of the capacitive inductive module and an auxiliary capacitive circuit ($CX3_i$, $CX4_i$) of the second set is connected to the terminals of the capacitive module.

3. The system according to claim 1 or 2, wherein the first and second sets of switchable auxiliary capacitive circuits ($CX1_i$, $CX2_i$, $CX3_i$, $CX4_i$) are located inside the component (CMP).

4. The system according to claim 3, wherein the component (CMP) includes a first output terminal (TX1) and a second output terminal (TX2) for transmitting data to the antenna, and a first and a second auxiliary terminal (A1, A2),

   the capacitive inductive module comprises a first block (BLC1) connected between the first output terminal (TX1) and a first terminal (B1) of the antenna and including a first main inductive element (LP1) connected in parallel to the terminals of a first main capacitor (CP1) and a second block (BLC2) connected between the second output terminal (TX2) and a second terminal (B2) of the antenna and including a second main inductive element (LP2) connected in parallel to the terminals of a second main capacitor (CP2),
   the capacitive module comprises a first additional capacitor (CA1) connected in series between the first block (BLC1) and said point of minimum voltage (GND) and a second additional capacitor (CA2) connected in series between the second block (BLC2) and said point of minimum voltage (GND),
   the first set of auxiliary capacitive circuits comprises a first assembly of switchable auxiliary capacitors ($CX1_i$) connected in parallel between the first auxiliary terminal (A1) and the first output terminal (TX1) and a second assembly of switchable auxiliary capacitors ($CX2_i$) connected in parallel between the second auxiliary terminal (A2) and the second output terminal (TX2), and
   the second set of auxiliary capacitive circuits comprises a third assembly of switchable auxiliary capacitors ($CX3_i$) connected in parallel between the first auxiliary terminal (A1) and the point of minimum voltage (GND) and a fourth assembly of switchable auxiliary capacitors ($CX4_i$) connected in parallel between the second auxiliary terminal (A2) and the point of minimum voltage (GND).

5. The system according to one of the preceding claims, wherein the component (CMP) comprises a first and a second input terminal (RX1, RX2) connected to both terminals of the antenna for receiving data from the antenna, and the control means comprise at least one detector (DCT) configured to detect the largest voltage at the terminals of the antenna.

6. The system according to one of the preceding claims, wherein the component (CMP) is capable of operating in a reader mode or in a card mode.

7. A wireless communication apparatus, comprising a system according to one the preceding claims.

# FIG.1
## ART ANTÉRIEUR

## FIG.2

EP 3 101 816 B1

## FIG.3

EP 3 101 816 B1

## FIG.4

FIG.5

**EP 3 101 816 B1**

## RÉFÉRENCES CITÉES DANS LA DESCRIPTION

**Documents brevets cités dans la description**

- US 2014106668 A1